(19) Europäisches Patentamt
European Patent Office
Office européen des brevets

(11) Veröffentlichungsnummer : **0 084 594**
**B1**

(12) # EUROPÄISCHE PATENTSCHRIFT

(45) Veröffentlichungstag der Patentschrift : **12.11.86**

(51) Int. Cl.$^4$ : **C 03 C 11/00**

(21) Anmeldenummer : **82108264.1**

(22) Anmeldetag : **08.09.82**

(54) **Verfahren zur Herstellung von Schaumglasprodukten.**

(30) Priorität : **27.01.82 DE 3202623**

(43) Veröffentlichungstag der Anmeldung : **03.08.83 Patentblatt 83/31**

(45) Bekanntmachung des Hinweises auf die Patenterteilung : **12.11.86 Patentblatt 86/46**

(84) Benannte Vertragsstaaten :
**AT BE CH DE FR GB IT LI LU NL SE**

(56) Entgegenhaltungen :
**EP-A- 0 076 393**
**DE-A- 1 496 669**
**DE-A- 1 944 523**
**DE-A- 2 043 238**
**GB-A- 1 550 184**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Kehl, Ralf**
**Bockumer Strasse 198**
**D-4000 Düsseldorf 31 (DE)**
Erfinder : **Krause, Melita**
**Bregenzer Strasse 8**
**D-4019 Monheim-Baumberg (DE)**
Erfinder : **Schwab, Werner, Dr.**
**Bachstrasse 76**
**D-4018 Langenfeld (DE)**

**EP 0 084 594 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein verbessertes Verfahren zur Herstellung von Schaumglasprodukten durch thermische Behandlung von Alkalisilikaten oder Alkalihydroxiden sowie Flugstaub oder Flugasche mit einem $SiO_2$-Gehalt von 45 bis 98 Gewichtsprozent, vorzugsweise 89 bis 98 Gewichtsprozent.

Verfahren zur Herstellung von Formkörpern, die ganz oder teilweise aus Wasserglasschaum bestehen und denen andere Feststoffe wie Kaolin, Glimmer und Talkum zugesetzt sind, wobei die Gemische bei Temperaturen von 480 bis 500 °C verschäumt werden, sind bereits bekannt. Auch hat man schon Schaumstoffe hergestellt, die außer Wasserglas Flugstaub mit einem hohen $SiO_2$-Gehalt, Aluminiumpulver sowie Aluminiumphosphat enthalten und zu feuerfesten Produkten bei Temperaturen von etwa 400 °C verschäumt werden.

In der DE-A-19 44 523 wird ein Verfahren zur Herstellung von Schaumglas durch thermische Behandlung eines Gemisches aus glasigem, amorphem Mineralpulver, beispielsweise « Ferrosilicium-Ofenrauch », Metalloxiden und Wasserglas beschrieben. Diesem Gemisch werden vorzugsweise gasbildende Stoffe sowie andere « Kiesel-haltige » Füllmittel beigefügt. Zur Bildung der nichtgranularen Schaumglasprodukte ist ein 10 bis 20 %iger Gehalt an Metalloxiden erforderlich, der das Entstehen der Glasphase beschleunigt bzw. intensiviert. Beim Erhitzen auf 250 bis 400 °C bilden sich heterogene Produkte ; homogene Produkte resultieren erst beim Erhitzen auf 800 °C.

Aus der GB-A-1 550 184 ist die Herstellung von — nichtgeschäumten und nichtgranularen — Produkten durch thermisches Aushärten eines Gemisches aus Wasserglas, Flugasche und gegebenenfalls weiteren Zusatzstoffen bekannt. Die hierzu verwendeten Flugaschen fallen als Verbrennungsrückstand in mit Kohlestaub befeuerten Kraftwerken an und enthalten — im Gegensatz zu Flugstäuben und -aschen, die bei der Silicium- bzw. Ferrosiliciumherstellung resultieren — kein amorphes $SiO_2$. Das Wasserglas dient hierbei als Bindemittel, um die Flugasche-Teilchen zu einer festen Masse zu verbinden.

Gegenstand der DE-A-20 43 238 ist ein Verfahren zur Herstellung geschäumter — nichtgranularer — Formkörper, bei dem gleichfalls Flugaschen aus Kraftwerken sowie ferner ein Schaummittel Verwendung finden. Hierbei wird ein wäßriges Gemisch aus Kraftwerks-Flugasche, Wasserglas und einem pulverförmigen amphoteren Metall gebildet, das erhaltene geschäumte Material verformt und anschließend thermisch gehärtet.

Die DE-A-14 96 669 beschreibt ein Verfahren zur Herstellung eines Granulats, das aus einem Schaumglas besteht. Bei diesem Verfahren wird geschmolzenes Glas durch Zugabe eines Blähmittels aufgebläht und sodann das geblähte Produkt granuliert. Hierbei fließt das geschmolzene, geblähte Glas durch eine gelochte Platte ; die entstehenden Schaumglasfäden werden unter Bildung von Schaumglaskörnern abgeschnitten und abgekühlt.

Demgegenüber betrifft die vorliegende Erfindung ein Verfahren zur Herstellung homogener Schaumglasprodukte mit granulatartigen Eigenschaften aus Flugstaub oder Flugasche, die bei der Silicium- oder Ferrosiliciumherstellung anfallen, ohne die Anwendung derartig hoher Temperaturen und ohne den Zusatz von Härtern oder Schaummitteln.

Gegenstand der vorliegenden Erfindung ist somit ein Verfahren zur Herstellung homogener Schaumglasgranulate durch thermische Behandlung von Flugstäuben bzw. Flugaschen, die bei der Silicium- oder Ferrosiliciumherstellung anfallen, sowie wäßrigen alkalischen Lösungen, gegebenenfalls wäßrigen Alkalimetallsilikatlösungen, welches dadurch gekennzeichnet ist, daß man

a) ein Gemisch, bestehend aus Flugstaub oder Flugasche mit einem $SiO_2$-Gehalt von 45 bis 98 Gew.-%, vorzugsweise 89 bis 98 Gew.-%, einer wäßrigen Alkalimetallhydroxid-Lösung und gegebenenfalls Wasser, herstellt,

b) wobei die molare Zusammensetzung des Gemisches der allgemeinen Formel I

$$(Me_2O) \cdot (SiO_2)_n \cdot (H_2O)_m \qquad (I)$$

entspricht, in welcher Me = Natrium oder Kalium, n = 5 bis 8 und m = 19 bis 45 bedeuten,

c) das Gemisch in einer auf Temperaturen im Bereich von 100 bis 150 °C aufgeheizten Misch- und Knetvorrichtung während einer Dauer von 10 bis 60 Minuten zu einer plastischen Masse verarbeitet und gleichzeitig zur Reaktion bringt,

d) das erhaltene homogene Reaktionsprodukt noch im plastischen Zustand austrägt, durch eine Lochscheibe preßt sowie mittels einer an der Außenseite der Lochscheibe liegenden Schneidvorrichtung zerkleinert und

e) anschließend das erhärtete Produkt durch Erhitzen auf Temperaturen im Bereich von 200 bis 300 °C für eine Zeitdauer von 10 bis 15 Minuten aufbläht.

Als Schneidvorrichtung kann beispielsweise ein Schneidflügel oder eine Abschneidblende dienen.

Für das obige Verfahren kommen generell Flugstäube oder Flugaschen in Frage, die bei der Silicium- oder Ferrosiliciumherstellung anfallen und die 45 bis 98, vorzugsweise 89 bis 98 Gewichtsprozent $SiO_2$ enthalten. Der restliche Gehalt entfällt auf kleine Mengen an Siliciumcarbiden, Kohlenstoff und ferner Eisen und Aluminiumoxide sowie Titandioxid.

Als Alkalisilikatlösungen kommen handelsübliche Produkte mit Molverhältnissen von $Na_2O$ bezie-

hungsweise $K_2O : SiO_2$ wie 1 : 2 bis 1 : 4 in Frage. Insbesondere werden Natriumsilikatlösungen, die als Wasserglas 37/40 bezeichnet werden und ein Molverhältnis von $Na_2O : SiO_2$ wie 1 : 3,46 und einen Feststoffgehalt von 34,9 Gewichtsprozent besitzen, verwendet.

Es hat sich gezeigt, daß bei der Zusammensetzung des Gemisches gemäß der Formel I besonders technisch brauchbare Produkte erhalten werden, wenn n den Wert 5 bis 6 und m im Bereich der Werte 31 bis 43 bei Verwendung von Alkalisilikat liegt, wobei Me Natrium bedeutet.

Die zuzusetzende Menge Wasser ergibt sich aus den in der Formel I angeführten Grenzen, sofern nicht in der verwendeten Alkalisilikatlösung entsprechende Wassermengen von vornherein vorhanden sein sollten. Entsprechendes gilt auch für Natriumhydroxid- und Kaliumhydroxidlösungen. Gewünschtenfalls können auch Gemische aus Alkalisilikat- und Alkalihydroxidlösungen eingesetzt werden.

Zur Durchführung des Verfahrens wird in einer auf 100 bis 150 °C aufgeheizten Misch- und Knetvorrichtung das Gemisch zu einer breiigen Masse verarbeitet. Die Verweilzeit des Reaktionsgemisches in der Misch- und Knetvorrichtung ist insbesondere abhängig von der Heiztemperatur und dem Wassergehalt und beträgt 10 bis 60 Minuten, vorzugsweise 15 bis 25 Minuten.

Das Reaktionsprodukt, welches als homogene Masse vorliegt, wird in noch plastischem Zustand ausgetragen, zweckmäßigerweise mit einer Auspreßschnecke, sowie durch eine Lochscheibe gepreßt und durch eine an der Außenseite der Lochscheibe liegende Schneidvorrichtung zerkleinert. Diese ist zweckmäßigerweise an der Außenseite der Lochscheibe angebracht. Bei einem Abschneidflügel ist es vorteilhaft, wenn dieser an dem verlängerten Wellenstück der Auspreßschnecke angebracht ist. Es hat sich als vorteilhaft erwiesen, gegebenenfalls eine Lochscheibe aus Kunststoff zu verwenden, da hierdurch ein eventuelles Verkleben der Masse an den Austrittsöffnungen verhindert wird. Durch Variieren des Lochdurchmessers in der Lochscheibe kann im übrigen der Korndurchmesser der Granulate eingestellt werden. Die ausgepreßte plastische Masse erhärtet unmittelbar nach dem Zerkleinern durch die Schneidvorrichtung. Die Härtungsgeschwindigkeit kann auch dadurch beeinflußt und gelenkt werden, daß man die Lochscheibe an der Austrittsseite kühlt. Dies kann durch Verwendung eines Gasstroms, beispielsweise durch Preßluft, bewirkt werden.

Das erhärtete Produkt wird durch Erhitzen auf Temperaturen von 200 bis 300 °C, vorzugsweise 250 bis 280 °C, zum Aufblähen gebracht. Der Aufblähvorgang ist nach 10 bis 15 Minuten abgeschlossen. Zur Vereinheitlichung des Korndurchmessers können im übrigen die anfallenden Granulate noch durch entsprechende Prüfsiebe von gegebenenfalls zu großen oder zu kleinen Teilen getrennt werden.

Das verbesserte Verfahren gestattet die Herstellung von kugelförmigen Granulaten mit homogener Struktur. Man erhält Produkte mit Schüttdichten, die etwa zwischen 0,1 bis 0,7 $g/cm^3$ liegen und einen Korndurchmesser von etwa 1 bis 15 mm aufweisen. Die auf diese Weise herstellbaren Granulate zeigen darüber hinaus eine gute Festigkeit und Volumenstabilität.

Die Schüttdichten sind im übrigen abhängig von der beim Aufblähen angewendeten Temperatur und Zeit.

Die nach dem beschriebenen Verfahren herstellbaren Produkte können insbesondere als Isoliermaterial für solche Zwecke Verwendung finden, bei denen unbrennbares, leichtes Material erwünscht ist. Neben der Verwendung als Verpackungsmaterialien können auch entsprechende Formkörper und Platten für Isolationszwecke hergestellt werden.

## Beispiele

In den nachstehenden Beispielen wird der Anmeldungsgegenstand nochmals erläutert, ohne daß er auf diese Beispiele beschränkt ist. Dabei werden jeweils Gemische aus den im einzelnen angeführten Substanzen in dem angegebenen Mischungsverhältnis hergestellt. Die Gemische werden unter Einhaltung der jeweils angegebenen Verweilzeit in einer Misch- und Knetvorrichtung zu einer plastischen Masse verarbeitet und zur Reaktion gebracht. Danach wird das Produkt in noch plastischem Zustand mit Hilfe einer Auspreßschnecke ausgetragen und durch eine Lochscheibe gepreßt sowie durch einen Schneidflügel, der unmittelbar an der Außenseite der Lochscheibe an dem verlängerten Wellenstück der Auspreßschnecke angebracht ist, zerkleinert. Die Lochscheibe wird an der Austrittsseite mit einem Luftstrom gekühlt. Schließlich wird das erhärtete Produkt unter den angegebenen Bedingungen zum Aufblähen gebracht.

### Beispiel 1

Mischungsverhältnis ($SiO_2 : Na_2O$) 6 : 1

16 kg Wasserglas 37/40
3,5 kg Flugstaub 90 % $SiO_2$

Heiztemperatur für die Misch- und Knetvorrichtung : 150 °C
Verweilzeit in Misch- und Knetmaschine : 20 Minuten
Lochdurchmesser der Lochscheibe : 4,5 mm
Aufblähen : 15 Minuten, 280 °C

Dichte : 0,12 g/$cm^3$
Korndurchmesser : 7 bis 15 mm

Beispiel 2

Mischungsverhältnis ($SiO_2$ : $Na_2O$) 6 : 1

24,0 kg Wasserglas 37/40
5,2 kg Flugstaub 90 % $SiO_2$
2,9 kg Wasser

Heiztemperatur für die Misch- und Knetvorrichtung : 150 °C
Verweilzeit in Misch- und Knetmaschine : 60 Minuten
Lochdurchmesser der Lochscheibe : 4,5 mm
Aufblähen : 15 Minuten, 280 °C
Dichte : 0,12 g/$cm^3$
Korndurchmesser : 7 bis 15 mm

Beispiel 3

Mischungsverhältnis ($SiO_2$ : $Na_2O$) 6 : 1

9,2 kg Flugstaub 90 % $SiO_2$
3,7 kg NaOH (50 %ig)
6,7 kg Wasser

Heiztemperatur für die Misch- und Knetvorrichtung : 100 °C
Verweilzeit in Misch- und Knetmaschine : 20 Minuten
Lochdurchmesser der Lochscheibe : 4,5 mm
Aufblähen : 15 Minuten, 250 bis 280 °C
Dichte : 0,15 bis 0,17 g/$cm^3$
Korndurchmesser : 7 bis 15 mm

Beispiel 4

Mischungsverhältnis ($SiO_2$ : $K_2O$) 6 : 1

9,2 kg Flugstaub 90 % $SiO_2$
5,15 kg KOH (50 %ig)
6,68 kg Wasser

Heiztemperatur für die Misch- und Knetvorrichtung : 100 °C
Verweilzeit in Misch- und Knetmaschine : 20 Minuten
Lochdurchmesser der Lochscheibe : 4,5 mm
Aufblähen : 15 Minuten, 260 °C
Dichte : 0,13 bis 0,16 g/$cm^3$
Korndurchmesser : 7 bis 15 mm

**Patentansprüche**

1. Verfahren zur Herstellung homogener Schaumglasgranulate durch thermische Behandlung von Flugstäuben bzw. Flugaschen, die bei der Silicium- oder Ferrosiliciumherstellung anfallen, sowie wäßrigen alkalischen Lösungen, gegebenenfalls wäßrigen Alkalimetallsilikatlösungen, dadurch gekennzeichnet, daß man

a) ein Gemisch, bestehend aus Flugstaub oder Flugasche mit einem $SiO_2$-Gehalt von 45 bis 98 Gew.-%, vorzugsweise 89 bis 98 Gew.-%, einer wäßrigen Alkalimetallsilikat- und/oder einer wäßrigen Alkalimetallhydroxid-Lösung und gegebenenfalls Wasser, herstellt,

b) wobei die molare Zusammensetzung des Gemisches der allgemeinen Formel I

$$(Me_2O) \cdot (SiO_2)_n \cdot (H_2O)_m \quad \text{(I)}$$

entspricht, in welcher Me = Natrium oder Kalium, n = 5 bis 8 und m = 19 bis 45 bedeuten,

c) das Gemisch in einer auf Temperaturen im Bereich von 100 bis 150 °C aufgeheizten Misch- und Knetvorrichtung während einer Dauer von 10 bis 60 Minuten zu einer plastischen Masse verarbeitet und

gleichzeitig zur Reaktion bringt,

d) das erhaltene homogene Reaktionsprodukt noch im plastischen Zustand austrägt, durch eine Lochscheibe preßt sowie mittels einer an der Außenseite der Lochscheibe liegenden Schneidvorrichtung zerkleinert und

e) anschließend das erhärtete Produkt durch Erhitzen auf Temperaturen im Bereich von 200 bis 300 °C für eine Zeitdauer von 10 bis 15 Minuten aufbläht.

2. Verfahren nach Anspruch 1, dadurch gekennzeichnet, daß man in Stufe a bzw. b eine Alkalimetallsilikat-Lösung verwendet und ein Gemisch gemäß Formel I herstellt, in welcher Me = Natrium, n = 5 bis 6 und m = 31 bis 43 bedeuten.

3. Verfahren nach Anspruch 1, dadurch gekennzeichnet, daß man in Stufe e das Produkt durch Erhitzen auf Temperaturen im Bereich von 250 bis 280 °C aufbläht.

4. Verfahren nach den Ansprüchen 1 bis 3, dadurch gekennzeichnet, daß man in Stufe d die Außenseite der Lochscheibe durch einen Gasstrom kühlt.

**Claims**

1. A process for the production of homogeneous foam glass granulates by heat treatment of fine dusts or light ashes of the type accumulating in the production of silicon or ferrosilicon and also aqueous alkaline solutions, optionally aqueous alkali metal silicate solutions, characterized in that

a) a mixture consisting of fine dust or light ashes with an $SiO_2$-content of from 45 to 98 % by weight and preferably from 89 to 98 % by weight, an aqueous alkali metal silicate and/or an aqueous alkali metal hydroxide solution and optionally water is prepared,

b) the molar composition of the mixture corresponding to general formula I

$$(Me_2O) \cdot (SiO_2)_n \cdot (H_2O)_m \qquad (I)$$

in which Me = sodium or potassium, n = 5 to 8 and m = 19 to 45,

c) the mixture thus prepared is processed for 10 to 60 minutes in a mixing and kneading apparatus heated to 100-150 °C to form a plastic mass and at the same time reacted,

d) the homogeneous reaction product obtained is discharged while still plastic, forced through a perforated disc and size-reduced by a cutting unit arranged on the outside of the perforated disc and

e) the hardened product is expanded by heating for 10 to 15 minutes to temperatures of from 200 to 300 °C.

2. A process as claimed in Claim 1, characterized in that an alkali metal silicate solution is used in step a or b and a mixture corresponding to formula I, in which Me = sodium, n = 5 to 6 and m = 31 to 43, is prepared.

3. A process as claimed in Claim 1, characterized in that in step e the product is expanded by heating to temperatures of from 250 to 280 °C.

4. A process as claimed in Claims 1 to 3, characterized in that in step d the outside of the perforated disc is cooled by a gas stream.

**Revendications**

1. Procédé pour la fabrication de granulés homogènes de verre expansé, par traitement thermique de poussières ou de cendres volantes que l'on obtient au cours de la fabrication du silicium ou du ferrosilicium, ainsi que de solutions aqueuses alcalines, éventuellement de solutions aqueuses de silicates de métaux alcalins, caractérisé en ce que

a) on prépare un mélange, constitué de poussières ou de cendres volantes, ayant une teneur en $SiO_2$ de 45 à 98 % en poids, de préférence 89 à 98 % en poids, d'une solution aqueuse de silicate de métal alcalin, ou d'une solution aqueuse d'un hydroxyde de métal alcalin, et éventuellement d'eau,

b) où la composition molaire du mélange correspond à la formule générale I

$$(Me_2O) \cdot (SiO_2)_n \cdot (H_2O)_m \qquad (I)$$

dans laquelle Me est du sodium ou du potassium, n = 5 à 8, et m = 19 à 45 ;

c) le mélange est transformé en une masse plastique dans une installation de mélange et de trituration, chauffée à des températures de l'ordre de 100 à 150 °C, pendant une durée de 10 à 60 minutes, et est amené en même temps à réagir,

d) on reprend le produit de la réaction, homogène, obtenu, encore à l'état plastique, le fait passer sous pression dans une plaque perforée, et le divise, au moyen d'un dispositif de coupe placé sur la face extérieure de la plaque perforée, et

e) immédiatement après, on fait gonfler le produit durci par chauffage à des températures de l'ordre de 200 à 300 °C pendant une durée de 10 à 15 minutes.

2. Procédé suivant la revendication 1, caractérisé en ce que dans l'étape a ou b, on utilise une solution de silicate de métal alcalin et prépare un mélange suivant la formule I, dans laquelle Me représente le sodium, n = 5 à 6 et m = 31 à 43.

3. Procédé suivant la revendication 1, caractérisé en ce que dans l'étape e on fait gonfler le produit par chauffage à des températures de l'ordre de 250 à 280 °C.

4. Procédé suivant les revendications 1 à 3, caractérisé en ce que, dans l'étape d, on refroidit la face extérieure de la plaque perforée au moyen d'un courant gazeux.